Europäisches Patentamt

(19) European Patent Office

Office européen des brevets

(11) Publication number: **0 156 367**
**A2**

# (12) EUROPEAN PATENT APPLICATION

(21) Application number: **85103615.2**

(22) Date of filing: **27.03.85**

(51) Int. Cl.⁴: **B 65 G 47/14**
**B 65 G 53/30**

(30) Priority: **27.03.84 US 593966**

(43) Date of publication of application:
**02.10.85 Bulletin 85/40**

(84) Designated Contracting States:
**DE GB NL**

(71) Applicant: **ESM INTERNATIONAL, INC.**
**9800 Townpark Drive**
**Houston Texas 77036(US)**

(72) Inventor: **Brum, Jerry W.**
**2524 Stoneridge**
**Modesto California(US)**

(72) Inventor: **Browne, Edward M.**
**6321 Tarna**
**Houston Texas(US)**

(74) Representative: **Jack, Bruce James et al,**
**Forrester & Boehmert Forrester House 52 Bounds Green**
**Road**
**London N11 2EY(GB)**

(54) **Sorting method and apparatus.**

(57) A method and apparatus for product sorting involves a system in which products are singulated (at 14) and examined (at 72) in a fluid stream. The fluidized products may be conveyed by an annular flow eductor (16) through a bypass unit (18) that regulates and withdraws a portion of the fluid flow. After sorting, the products may be decelerated by tangentially injecting them into the upper portion of a cyclone separator (76), and allowing them to gradually decelerate as they spin within the separator.

"SORTING METHOD AND APPARATUS"

This invention relates generally to methods and apparatus for sorting products such as food products and particularly to such methods and apparatus which are suitable for singulating and sorting fragile products.

In conventional sorting systems, desired products are separated from undesired products by singulating the product in a channelized system, presenting the product to a detection system for classification and diverting undesired material from the path that includes a desired material. The sorting operation is often conducted in connection with fluid conveyance systems that utilize a solids handling pump. U.S. Patent 3,382,975 to Hoover shows an exemplary device of this general type. These systems have two key problems which derive from the use of the solids handling pump. Firstly, damage to the product is possible as a result of physical contact with the pump's impeller, housing, and ports. Secondly, the pump sizing becomes a function of the product size and shape rather than the system flow rate.

Even if a fragile product is singulated without being damaged, it may thereafter be damaged as it lands on a collection device after inspection. Because of the high speed of the singulated product it is difficult to collect a large number of "accepted" products, at an acceptable rate, without damaging them.

0156367

Another difficulty with conventional apparatus is that it is difficult to adapt the sorting apparatus to sorting different products. Particularly, where the products differ in size, configuration or weight it has often not been possible in the past to efficiently sort different products with the same sorting apparatus.

In accordance with one preferred embodiment of the present invention, an apparatus for sorting products includes a means for singulating the products in a fluid stream. An annular flow eductor is arranged in fluid communication with the singulating means and a viewing window is arranged in fluid communication with the eductor.

In accordance with another preferred embodiment of the present invention, an apparatus for sorting fragile products includes a means for entraining the products in a fluid stream. Means for singulating the products are provided in fluid communication with the entraining means. A viewing channel is arranged in fluid communication with the singulating means and a cyclone separator communicates with the channel. The cyclone separator is arranged to gradually decelerate the fragile products.

In accordance with yet another preferred embodiment of the present invention, an apparatus for sorting products includes a means for singulating the products and a means for pumping the singulated products entrained in a fluid mixture. Means are provided for withdrawing a portion of the fluid from the mixture and for enabling the singulated product to be inspected after the fluid portion has been withdrawn.

In accordance with still another embodiment of the present invention, a method for sorting the products includes the steps of singulating the products in a fluid stream. Fluid is injected annularly into the fluid stream to convey the products to a viewing window.

In accordance with another preferred embodiment of the present invention, a method for sorting fragile products involves entraining the products in the fluid stream. Thereafter, the products are singulated and conveyed to a viewing channel. The products are examined in the viewing channel and subsequently decelerated in a cyclone separator.

In accordance with still another preferred embodiment of the present invention, a method for sorting products includes the step of singulating the products in a fluid stream. The products are pumped in the fluid stream to an inspection station. A portion of the fluid stream is withdrawn before the products reach the inspection station.

In the accompanying drawings:

Figure 1 is a schematic view of one embodiment of the present invention;

Figure 2 is an enlarged cross-sectional view taken generally along the line 2-2 in Figure 1;

Figure 3 is an enlarged cross-sectional view taken generally along the line 3-3 in Figure 1;

Figure 4 is an enlarged cross-sectional view taken generally along the line 3-3 in Figure 1, showing an alternate embodiment; and

Figure 5 is an enlarged, partilaly sectioned perspective view of the cyclone separator shown in Figure 1.

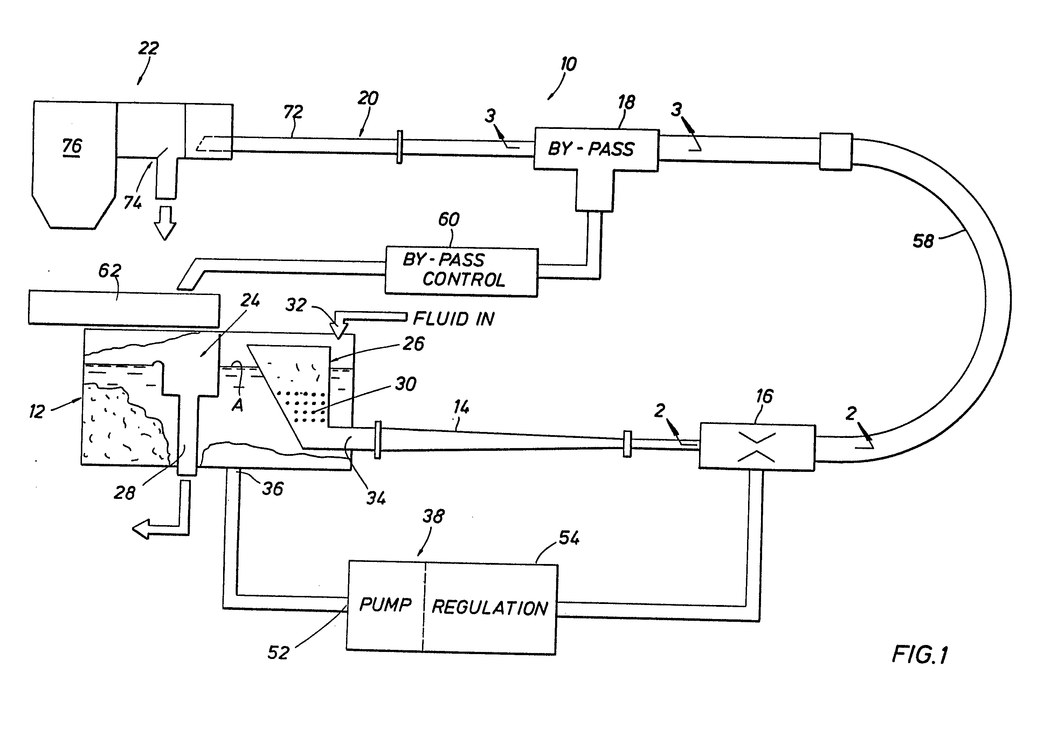

Referring to the drawings wherein like reference characters are used for like parts throughout the several views, a sorting apparatus 10 includes a system tank 12, a singulating section 14, an annular flow eductor 16, a bypass unit 18, a viewing or detection area 20 and a receiver 22. While the elevational characteristics of the apparatus 10 are not critical, the various components of the apparatus 10 may, if desired, be arranged in the two-tier arrangement, illustrated in Figure 1, wherein the system tank 12 and eductor 16 are one level and the bypass 18 and receiver 22 are arranged on a higher level with the receiver 22 positioned directly over the system tank 12. The present invention may be used to sort a variety of products, including fragile items, such as food products, for example uncooked french fry cut potatoes and shrimp.

The system tank 12 may be an open tank containing liquid, such as water, and including a skimmer 24 and an inlet hopper 26. The skimmer 24 is useful in drawing off the upper surface of the liquid, indicated as "A", in the tank 12 to thereby remove particulates and debris floating ——————

on the surface. Conveniently, the height of the skimmer is adjustable so that different liquid levels may be utilized. This debris is exhausted through the pipe 28 to a suitable disposable area. The inlet hopper 26, which may be located above the liquid surface, may take the form of a simple converging open topped receptacle which communicates with the singulating section 14. One or more apertures 30 may be formed in the hopper 26 below the liquid surface in order to allow the product inserted into the inlet hopper 26 and the liquid within the tank 12 to be drawn into the singulating section 14. A fluid inlet 32 is provided with the tank 12. In addition, a fluid outlet 34 communicates with transition section 14 and a separated outlet 36 communicates with a pump 38. The outlet 34 is sized to correspond with the size and shape of the product being conveyed.

The transition section 14, conveniently of circular cross-section, has a gradually converging diameter with the ultimate diameter, at a point closest to the eductor 16 being only slightly larger than the size of the products. As a result, the product inserted through the hopper 26 is singulated in the transition section 14.

Although the present invention is described with respect to an embodiment in which the product is conveyed along a liquid stream, the present invention is not so limited, since products may be conveyed either by a liquid or a gas stream. Moreover, the use of water is not limiting and is selected only because it is relatively economical.

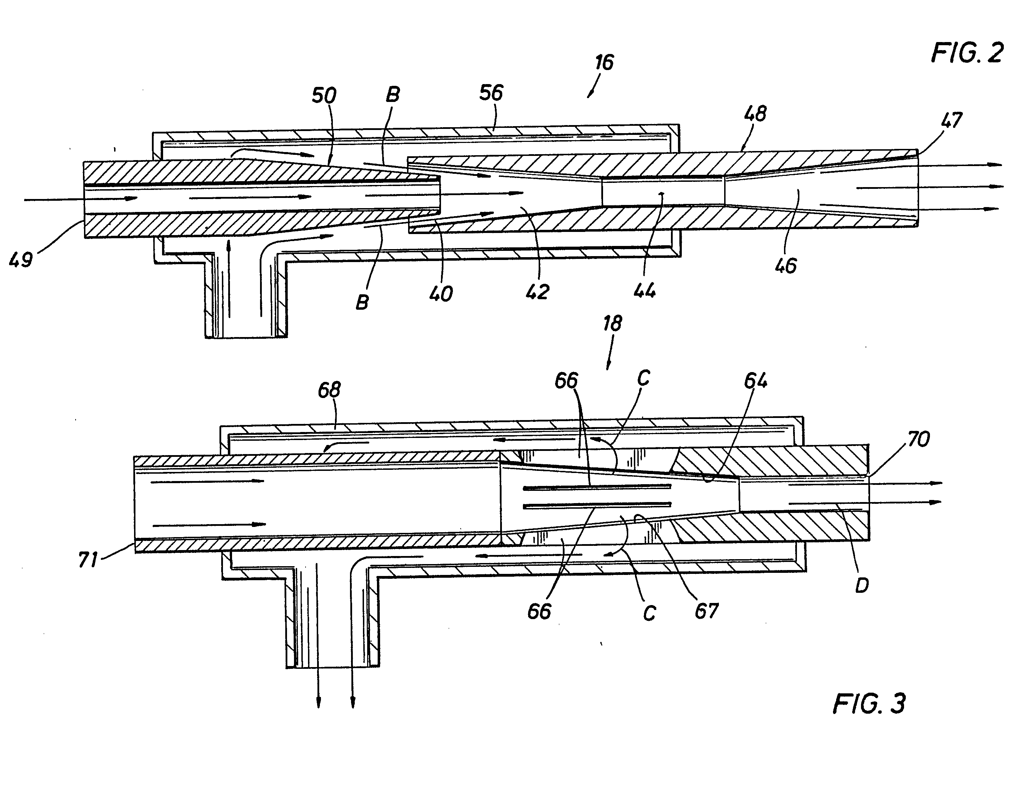

The mixture of the product and the liquid from the transition section 14 is sucked into the annular flow eductor 16, shown in Figure 2. The annular eductor orifice 40 may be adjustable to control the suction flow rate and pressure and also to regulate the discharge flow rate. The eductor 16 is conveniently sized to closely correspond to the product size and shape. The eductor 16 functions to enhance product separation and to greatly accelerate the product and the fluid.

The eductor 16 includes a nozzle 50 that extends partially into a venturi unit 48 to define the orifice 40. The venturi unit 48 includes a larger diameter converging area 42, an intermediate small diameter area 44 downstream from the area 42 and a subsequent internal diverging area 46 of still larger ultimate diameter. Thus, the cross-sectional area of the output 47 may be greater than the cross-sectional area of the input 49. Advantageously, the position of the venturi unit 48 is adjustable with respect to the nozzle 50 to adjust the cross-sectional area of the annular eductor orifice 40.

The motive flow is produced by the pump 38, conveniently a centrifugal pump connected to the liquid tank 12 by way of the outlet 36. The pump suction port 52 is conveniently screened to prevent the entrance of foreign material, product particles or product spillage. In addition a weir plate (not shown) is located at the suction port 52 to prevent the formation of a vortex. The pump 38 may include an automatic or manual pressure and/or flow rate regulation device 54. The regulated flow generated by the pump 38 is ducted to an annular housing 56 that surrounds the annular eductor orifice 40 and provides for circumferential in-flow of liquid to the orifice 40. The motive flow is injected substantially annularly (axially and tangentially) into the venturi unit 48, as indicated by the arrows "B" in Figure 2.

As the mixture discharges from the eductor 16, deceleration occurs and the mixture changes its direction of travel so as to return toward the system tank 12 in the radius sweep piping 58. The radius of the piping 58 should be large enough to minimize flow resistance and product damage.

The bypass unit 18 functions to regulate the flow rate developed by the eductor 16 so that the eductor can operate at its optimum efficiency while providing a suitable flow rate to the viewing area 20. The desired flow rate in the viewing area 20 is achieved by separating a component or percentage of the fluid in the bypass 18 and ducting that fluid to the bypass control 60, ultimately to return to the system tank 12 by way of a dewatering screen conveyor 62.

Through the use of the bypass unit 18, the eductor 16 and viewing area tube 20 may be sized in correspondence to the product size and shape and not to their respective flow relationships. The bypass unit 18 provides a means to separate the product from the fluid and to regulate the discharge flow rate and velocity. This regulation of the discharge flow rate may be manual, by variation of orifice sizing, or automatic by the provision of conventional flow rate and/or pressure regulation devices in the bypass control unit 60. Depending on total system parameters, the product may undergo positive, negative or no change in acceleration as it passes through the bypass unit 18. It should be noted that if desired, the bypass unit 18 may be located directly at the eductor 16 discharge port or it may even be included within the eductor 16 itself.

As shown in Figure 3. the bypass unit 18, may in accordance with one embodiment of the present invention, include a tapering inside diameter nozzle 64 with a plurality of axially oriented slits 66 arranged circumferentially along the converging internal region 67 of the nozzle 64. The nozzle 64 is encircled by a housing 68 which communicates with the bypass control 60. Due to the converging arrangement of the nozzle 64 and the presence of the slits 66, a desired amount of liquid is radially withdrawn into the housing 68, as indicated by the arrows "C" in Fig. 3, while the product continues along the main flow path (arrows D) because of its axial momentum. The amount of flow through the slits 66 is governed by the resistance or back pressure provided by the bypass control 60. Conveniently the diameter of the outlet 70 of the nozzle 64 corresponds to the diameter of the viewing area 20 and is smaller than the diameter of the inlet 71 of the bypass unit 18.

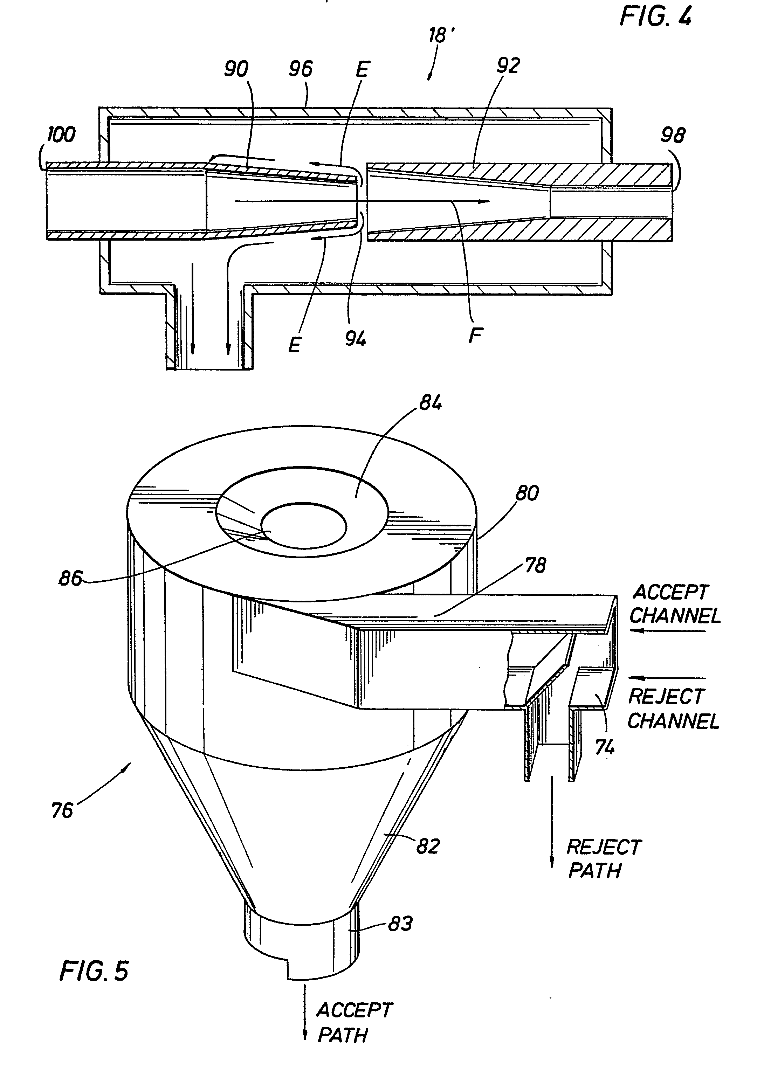

In accordance with another embodiment of the present invention, shown in Figure 4, the bypass unit 18' includes first and second successive converging nozzles 90 and 92. An annular gap 94 is arranged between the nozzles 90 and 92 to provide for the radial outflow of a portion of the liquid component of the liquid/product mixture, as indicated by the arrows E. The outflow through the gap 94 and into the housing 96 is controlled, as in the embodiment shown in Figure 3, by the bypass control 60. The output port 98 of the bypass unit 18', may be of a smaller cross-sectional area than the input port 100. Because of the axial momentum of the product, it continues along the main flow path (arrow F) despite the outflow through the gap 94.

After leaving the bypass unit 18, the mixture enters the viewing area or velocity tube 20. Tube 20 is sized in diameter corresponding to the product size and shape and

is long enough to allow for the fluid to form a reasonably stable velocity gradient. The discharge end 72 is transparent in this embodiment of the invention to allow optical viewing of the product for classification. In other embodiments non-optical inspection may be employed. As the product passes through the viewing area 20 an accept/reject decision may be made depending on the characteristics of the product being viewed. For example, bad areas or black spots on a french fry might be detected which must be cut out from the finished product. The product is conveyed from the viewing 20 to a receiver 22 that includes an accept/reject chute 74 and a cyclone 76.

A wide variety of techniques may be utilised for implementing the accept/reject operation at the chute 74. One advantageous technique for implementing this procedure, using a jet of air, is disclosed in U.S. Patent No. 3,382,975 to Hoover, hereby expressly incorporated by reference herein.

The rejected product exits through the accept/reject chute for disposal while accepted product passes from the accept/reject chute 74 into the cyclone decelerator 76 where it is slowly decelerated. The decelerated product exits from the decelerator 76 and lands on the dewatering screen conveyor 62. From here the product is conveyed to a subsequent processing area while the remaining liquid drains through the screen of the conveyor 62 back into the system tank 12.

Referring to Figure 5, the decelerator 76 includes the inlet chute 78, communicating with the accept/reject chute 74, an annular upper portion 80, a tapering, conical lower portion 82, and a lowermost, semi-cylindrical guide flange 83. The chute 78 is arranged so that the accepted product (the product moving in the accept channel) is tangentially ——————————

injected into the annular upper portion 80. As a result, the product spins in the portion 80 until it decelerates sufficiently to drop into the conical lower portion 82. A conical, inwardly tapering baffle 84 surrounds a central, axial opening 86 in the portion 80, which provides for air egress while preventing product ejection. The decelerator 76 creates a "fluid cushion" effect which gently decelerates the swirling product.

Through the use of the annular flow eductor 16, damage to the product may be avoided because there are no moving parts that may contact the product and the product path is straight through the eductor 16. In addition, the eductor 16 is easier to clean and maintain than a conventional solids handling pump. The motive flow rate and pressure may be easily adjusted by simply changing the size of the motive orifice 40. Moreover, the eductor 16 aids in singulating the product due to the high velocity through the throat of the eductor 16.

Through the use of the bypass unit 18 (or 18'), the eductor 16 may be operated at its most efficient rate, which generally involves too high a fluid flow rate for efficient viewing in the viewing area 20. This is because the bypass unit 18 (or 18') is capable of dewatering the mixture without causing disruption of the movement of the product to the viewing area 20.

The provision of a bypass unit 18 (or 18') of the type described herein would be advantageous in a variety of sorting apparatus, including, but not limited to the sorting apparatus 10 using an eductor 16. The bypass unit 18 allows a system pump or pump/eductor combination to operate at a very high suction which increases the flow rate of the product. Even if the velocity of the product is subsequently reduced, because of the close, serial packing of the product, produced by the dewatering effect of the bypass unit 18, the product flow rate for a given velocity, may be maximized. Moreover, the use of a bypass unit 18 facilitates the use of a smaller diameter viewing tube 20 so that better singulation may be attained. In addition, the bypass unit 18 allows the flow rate and pressure in the tube 20 to be closely controlled. Also, the system flow rate may be adjusted through the bypass unit 18 without changing the pump or pump/eductor combination, facilitating operations with products of varying size, shape or weight.

Particularly with fragile products, the cyclone separator 76 is advantageous in gently decelerating the conveyed product after sorting is complete. Thus, the present invention is particularly useful in conveying food products such as uncooked "french fry" cut potatoes and shrimp.

While the present invention has been described with respect to a limited number of embodiments, those skilled in the art will appreciate a number of variations and modifications and it is intended within the appended claims to cover all such variations and modifications as fall within the true spirit and scope of the present invention.

The features disclosed in the foregoing description, in the following claims and/or in the accompanying drawings may, both separately and in any combination thereof, be material for realising the invention in diverse forms thereof.

WHAT IS CLAIMED IS:

1. An apparatus for sorting products comprising:

a means for singulating said products in a fluid stream;

an annular flow eductor in fluid communication with said singulating means; and

a viewing window in fluid communication with said eductor.

2. The apparatus of claim 1 including means situated within the flow path between said viewing window and said eductor for regulating the amount of fluid conveyed with said product.

3. The apparatus of claim 2 wherein said regulating means includes a converging nozzle with a plurality of restricted flow path apertures formed therein and means for controlling the pressure of fluid exiting through said slits.

4. The apparatus of claim 2 wherein said regulating means includes a pair of nozzles with converging internal flow paths, said nozzles being spaced from one another to define an annular gap for the partial outflow of said fluid stream.

0156367

5.    The apparatus of any preceding claim, wherein said singulating means is a converging passageway.

6.    The apparatus of any preceding claim, wherein said eductor includes a venturi nozzle.

7.    The apparatus of any preceding claim, including means for separating desired from undesired products, said separating means being positioned adjacent to said viewing window.

8.    The apparatus of any preceding claim, including means for gradually decelerating the product after exiting from said viewing window.

9.    The apparatus of claim 8, wherein said gradual decelerating means is a cyclone separator.

0156367

10. A method for sorting products comprising the steps of:

singulating said products in a fluid stream;

annularly injecting fluid into said product containing fluid stream to accelerate said product; and

viewing said product at a viewing window as said product is conveyed past said window.

11. The method of claim 10 including the step of withdrawing some of the injected fluid before conveying said product past said viewing window.

12. The method of claim 10 or 11, including the step of optimizing the entrainment of said product in said fluid stream and optimizing the rate of conveyance of said product through said viewing window.

13. The method of claim 10, 11 or 12, including the step of gradually decelerating said product after exiting from said viewing window.

14. The method of any one of claims 10 to 13, including the step of separating desired from undesired products after viewing in the viewing window.

FIG.1

FIG. 2

FIG. 3

0156367

0156367

*FIG. 4*

*FIG.5*

ACCEPT
CHANNEL

REJECT
CHANNEL

REJECT
PATH

ACCEPT
PATH